(19) **Europäisches Patentamt / European Patent Office / Office européen des brevets**

(11) **EP 3 191 539 B1**

(12) **FASCICULE DE BREVET EUROPEEN**

(45) Date de publication et mention
de la délivrance du brevet:
**25.12.2019 Bulletin 2019/52**

(21) Numéro de dépôt: **15770568.2**

(22) Date de dépôt: **10.09.2015**

(51) Int Cl.:
*C08G 63/12* $^{(2006.01)}$        *C08G 63/16* $^{(2006.01)}$
*C08G 63/668* $^{(2006.01)}$      *C08G 63/672* $^{(2006.01)}$
*C08G 63/66* $^{(2006.01)}$

(86) Numéro de dépôt international:
**PCT/FR2015/052407**

(87) Numéro de publication internationale:
**WO 2016/038302 (17.03.2016 Gazette 2016/11)**

(54) **RÉSINES POLYESTERS HYDROXYLES OU CARBOXYLES BIOSOURCEES**

BIOBASIERTE HYDROXYL- ODER CARBOXYLPOLYESTERHARZE

BIOBASED HYDROXYL OR CARBOXYL POLYESTER RESINS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2014 FR 1458597**

(43) Date de publication de la demande:
**19.07.2017 Bulletin 2017/29**

(73) Titulaire: **Arkema France
92700 Colombes (FR)**

(72) Inventeurs:
• **DELMAS, Grégory
  60300 Senlis (FR)**

• **RIONDEL, Alain
  77178 Saint Pathus (FR)**
• **COGORDAN, Frank
  75019 Paris (FR)**
• **OZERAY, Hervé
  60190 Estrees Saint Denis (FR)**

(74) Mandataire: **Killis, Andréas
ARKEMA France
Département Propriété Industrielle
420, rue d'Estienne d'Orves
92705 Colombes Cedex (FR)**

(56) Documents cités:
**EP-A1- 2 325 229        EP-A1- 2 623 538
US-A1- 2002 115 817      US-A1- 2013 197 152
US-A1- 2014 371 419**

Printed by Jouve, 75001 PARIS (FR)

**Description**

L'invention concerne une résine polyester de structure linéaire ou ramifiée et exempte d'acides gras insaturés, laquelle est hydroxylée ou carboxylée à base de matières premières renouvelables, en particulier au moins à base de polyol biosourcé spécifique, une composition de revêtement comprenant ladite résine et son utilisation dans les revêtements ayant une durabilité élevée et à base de matières premières renouvelables, en particulier pour revêtements de feuilles métalliques.

Les résines polyesters fonctionnalisées sans huile sont bien connues pour les applications de revêtements pour feuilles métalliques connus sous le terme anglais « coils ».

Des résines polyesters polyols à base de composants d'origine renouvelable dits également « biosourcés » pour application dans les revêtements de feuilles métalliques sont déjà décrits dans WO 2012/042153 et en particulier des résines sans huile. Ces résines polyesters sont à base de colophane. Cependant, comme telles, elles ont besoin d'amélioration en termes de durabilité et de résistance au jaunissement.

B. A. Noordover et al décrit dans J. Biomacromolecules, 2006, 7, 3406-3416 des co- et terpolyesters basés sur l'isosorbide et l'acide succinique et d'autres monomères d'origine renouvelable comme le 2,3 butanediol ou 1,3 propanediol ou l'acide citrique. EP 2 325 229 A1 concerne des compositions polymériques pouvant être utilisées comme revêtements, en particulier sur feuilles de métal. L'exemple 1 décrit la réaction entre l'acide succinique, l'isosorbide et le glycérol. Une majorité de polyéthylène téréphthalate est également utilisé.

Aucune présence de polyacides de chaîne plus longue en au moins $C_8$ n'est mentionnée ou suggérée.

La présente invention cherche à mettre au point des nouvelles résines polyesters hydroxylées ou carboxylées, sans huile et exempte de tout résidu d'acide gras insaturé ayant une durabilité et résistance au jaunissement et un compromis dureté/flexibilité améliorées concernant le revêtement obtenu, en particulier pour application sur feuilles de métal.

Le premier objet de la présente invention concerne ladite résine de polyester linéaire ou ramifié qui est hydroxylé et/ou carboxylé à base d'une composition spécifique avec des matières premières renouvelables et en particulier à base d'un polyol biosourcé spécifique.

Est également couverte la solution de ladite résine dans un solvant organique.

Un autre objet de l'invention concerne une composition de revêtement comprenant ladite résine et en particulier une composition réticulable de revêtement.

Fait également partie de l'invention l'utilisation de ladite résine dans lesdites compositions de revêtement et finalement le revêtement qui en résulte.

Donc, le premier objet de l'invention concerne une résine polyester de structure linéaire ou ramifiée et exempte d'acides gras insaturés, qui est hydroxylée ou carboxylée, éventuellement hydroxylée et carboxylée, laquelle résine est à base de :

- un composant acide a) comprenant :

    a1) au moins un polyacide ou anhydride carboxylique en $C_4$ à $C_6$, de préférence de fonctionnalité $f_{a1}$ allant de 2 à 4, plus préférentiellement égale à 2
    a2) au moins un polyacide ou anhydride carboxylique en $C_8$ à $C_{54}$, de préférence de fonctionnalité $f_{a2}$ allant de 2 à 4, plus préférentiellement égale à 2
    a3) en option, au moins un monoacide saturé en $C_2$ à $C_{22}$, éventuellement pouvant porter un groupement hydroxyle

- un composant alcool b) comprenant :

    b1) au moins un polyol biosourcé de fonctionnalité $f_{b1}$ d'au moins 2, de préférence 2, porteur d'un motif 1,4:3,6 dianhydrohexitol
    et au moins un des deux polyols b2) ou b3) suivants :
    b2) au moins un polyol différent de b1) et de fonctionnalité $f_{b2}$ d'au moins 2, de préférence 2, qui est un polyol en $C_3$ à $C_{36}$
    b3) au moins un polyol différent de b1) et de b2) de fonctionnalité $f_{b3}$ d'au moins 3, de préférence 3,

    avec a2) étant un polyacide biosourcé et choisi parmi : l'acide azélaïque ($C_9$), acide sébacique ($C_{10}$), acide undécane dioïque, acide dodécane dioïque ou dimères et trimères d'acides gras respectivement en $C_{36}$ et $C_{54}$..

Selon une option particulière, les deux polyols b2) et b3) peuvent être présents.

Le terme « résine exempte d'acides gras insaturés » signifie, selon la présente invention, l'absence de tout acide gras insaturé ou d'huile d'acide gras insaturé sous forme incorporée chimiquement dans la structure de ladite résine ou sous forme libre (non incorporée chimiquement).

Ledit polyacide a1) inclut dans sa couverture des acides comme l'acide aconitique issu de la canne à sucre, en $C_6$ et de fonctionnalité $f_{a1} = 3$. Le polyacide a1) peut aussi porter un groupement parmi hydroxyle comme l'acide citrique avec $f_{a1} = 3$ et porteur en plus d'une fonction hydroxyle ou malique avec $f_{a1} = 2$ et porteur d'un hydroxyle ou l'acide glutamique avec $f_{a1} = 2$ et porteur d'un groupement amine.

Plus particulièrement, ledit motif porté par ledit polyol b1) est l'isosorbide (1,4:3,6 dianhydro-D-sorbitol), l'isomannide (1,4:3,6 dianhydro-D-mannitol) ou l'isoidide (1,4:3,6 dianhydro-L-iditol).

Selon une préférence particulière, une fraction d'au moins 50 %, de préférence d'au moins 75 % en poids de ladite résine est biosourcée.

Une résine ou un produit biosourcé signifie qu'il comprend une matière première d'origine non fossile qui est renouvelable et d'origine végétale ou animale.

La caractéristique de « biosourcé » d'un produit ou résine ou d'une matière première utilisée comme composant dudit produit, telle qu'un polyacide, un polyol ou un acide gras peut être déterminée par détermination du taux de carbone $^{14}$C, lequel atteste l'origine renouvelable du carbone dudit composant comme tel ou incorporé dans un produit final après réaction (qui ne modifie en rien ce taux). En effet, un composant biosourcé est un composant dans lequel le carbone provient du dioxyde de carbone ($CO_2$) fixé par photosynthèse à partir de l'atmosphère terrestre. La teneur fixe spécifique en carbone $^{14}$C est la signature d'un composant biosourcé qui se différencie de celui correspondant à un composant d'origine fossile. Cette teneur peut être déterminée selon ASTM D 6866 (ASTM D 6866-06) ou ASTM D 7026 (ASTM D 7026-04), en particulier par spectrométrie de masse selon ASTM D6866-06.

Selon un cas particulier, ledit composant b) comprend b2) et b3) et au moins 50 % en poids, de préférence au moins 75 % en poids dudit composant b) est biosourcé.

Plus particulièrement, les composants a) et b) peuvent être à 100 % biosourcés.

Selon une autre option particulière, ledit polyol b2) est biosourcé et choisi parmi le 1,3 propylène diol ou le 1,2 propylène diol, le 1,4 butane diol ou les diols à base (signifiant dérivés) d'acides gras saturés. De tels diols peuvent avoir une chaîne en $C_{12}$ à $C_{36}$.

Encore plus particulièrement, ledit polyol b3) peut être biosourcé et choisi parmi le glycérol et ses dérivés éther-polyols, tels que les polyglycérols (dérivés oligomères de glycérol).

Dans le cas où la fonctionnalité d'un des composants cités est supérieure à 2, de préférence la fonctionnalité moyenne en nombre du mélange des composants a) + b) ne dépasse pas 2. Ledit polyester est donc de structure linéaire ou ramifiée et par définition il ne peut comporter de structure réticulée, laquelle est ainsi par définition exclue. L'homme du métier sait en particulier choisir les proportions et les fonctionnalités de composants réactifs ainsi que le taux de conversion des fonctions réactives, afin d'éviter toute réticulation ou gélification chimique du système réactif. Cette question ne peut se poser que quand l'un des composants réactifs (a) et (b) est de fonctionnalité moyenne supérieure à 2 pour obtenir une structure ramifiée. Il est possible de contrôler la structure sans aucune réticulation possible, en ajustant les proportions des composants a) et b) de sorte que la fonctionnalité moyenne en nombre (par mole de composant réactant) sur l'ensemble des composants réactifs (a + b) ne dépasse pas 2 ou si elle dépasse 2 de limiter le taux de conversion bien avant le point de gel (gélification) prédictible soit par l'expérimentation soit par le calcul selon la relation de Macosko-Miller et/ou par addition progressive du composant le moins fonctionnalisé sur le composant le plus fonctionnalisé sous agitation efficace (maintenu en excès de fonctions réactives par l'addition progressive du deuxième composant réactif). La relation de Macosko-Miller citée ci-haut est telle que définie selon Macromolecules, vol. 9, pages 199-211 (1976) et est considérée comme bien connue de l'homme du métier. Pour plus de clarté, nous rappelons ci-dessous cette relation qui relie le rapport critique $r_c$ des fonctions réactives pour deux composants réactifs A et B au point de gel, $r_c$ = fonctions de A/fonctions B, avec la fonctionnalité moyenne de A qui est $f_A$, et celle de B qui est $f_B$ avec le taux critique de conversion au point de gélification $x_g$ suivant :

$$r_c * x_g^2 = 1 / [(f_B - 1)*(f_A - 1)]$$

Ledit polyacide a1) peut être en particulier un diacide aliphatique biosourcé choisi parmi : acide succinique, acide tartrique, acide citrique, acide malique ou acide itaconique, acide glutarique, acide glutamique, acide fumarique, acide furanne dicarboxylique, acide tetrahydrofuranne 2,5 dicarboxylique et acide tetrahydrofuranne 3,5 dicarboxylique et de préférence parmi : acide succinique, acide itaconique, acide glutamique, acide fumarique, acide furane dicarboxylique, acide tetrahydrofuranne 2,5 dicarboxylique et acide tetrahydrofuranne 3,5 dicarboxylique.

La présence du diacide a2) et sa proportion par rapport à a1) sont des facteurs importants pour jouer sur le compromis dureté/flexibilité du revêtement final et ajuster le rapport dureté/flexibilité, l'augmentation du taux de a2) améliore la flexibilité. Inversement, la dureté du revêtement augmente avec le taux de a1).

De préférence, le rapport molaire a1)/a2) varie de 2 à 8 et plus préférentiellement de 3 à 7.

Selon un mode particulier, ledit monoacide a3) est présent dans la composition de ladite résine et sélectionné parmi : l'acide acétique, l'acide pyruvique, l'acide lactique ou la colophane (acide abiétique et isomères en $C_{20}$) ou un acide gras saturé en $C_{12}$ à $C_{22}$.

Selon un mode particulier et préféré de ladite résine, ledit polyol b1) représente au moins 30 % en poids de ladite résine, ce poids de « ladite résine » signifiant ici « par rapport au poids total des composants a) + b) utilisés pour ladite résine ».

Plus particulièrement, le taux du polyol b1) en % mol/mol sur l'ensemble du composant alcool b) varie de 40 à 80 et de préférence de 55 à 65.

Le taux correspondant au polyol b2) peut varier de 0 à 50 et de préférence de 25 à 35.

Le taux molaire du polyol b3) peut varier de 0 à 20 et de préférence de 5 à 15.

Concernant la fonctionnalité OH ou carboxy, éventuellement OH et carboxy de ladite résine, elle peut correspondre à un indice de OH et/ou d'acide allant de 10 à 200 mg KOH/g.

Plus particulièrement, ladite résine peut avoir une fonctionnalité carboxy correspondant à un indice d'acide inférieur à 20, de préférence inférieur à 10 et plus préférentiellement inférieur à 5 et en particulier 0 mg KOH/g et une fonctionnalité en OH correspondant à un indice OH allant de 10 à 200, de préférence de 10 à 150, plus préférentiellement de 10 à 100 mg KOH/g. L'indice OH est déterminé selon ISO 2554. L'indice d'acide est déterminé selon ISO 2114.

La résine selon l'invention peut donc être fonctionnalisée OH ou carboxy ou OH et carboxy, de préférence dans ce dernier cas avec une fonctionnalité OH prédominante, c'est-à-dire à plus de 90 % de groupements fonctionnels étant OH.

Concernant la masse moléculaire moyenne en nombre Mn de ladite résine, elle peut varier de 500 à 20000 et de préférence de 750 à 10000. Cette masse moléculaire Mn est déterminée par calcul à partir de l'indice de fonctionnalité (en mg KOH/g) et de la fonctionnalité moyenne $f_r$ de ladite résine qui représente le nombre moyen de fonctions OH et/ou acide carboxy, calculé à partir du bilan matière (proportions molaires) et de la fonctionnalité connue des composants a) et b) utilisés.

La Tg de ladite résine peut varier de -10°C à 100°C et de préférence de 10 à 50°C. Ladite Tg est déterminée par mesure DSC au 2ème passage à 10°C/min.

Le deuxième objet de l'invention concerne une solution de résine dans un solvant organique, laquelle solution comprend au moins une résine telle que définie ci-haut selon l'invention. Plus particulièrement, ledit solvant peut être sélectionné parmi les esters méthyliques ou esters éthyliques d'acides monocarboxyliques en $C_2$ à $C_4$ ou esters desdits acides monocarboxyliques avec des monoéthers méthoxy ou éthoxy de diols en $C_2$ à $C_4$, en particulier l'acétate de méthoxy propyle ou parmi diesters méthyliques ou éthyliques de diacides carboxyliques en $C_4$ à $C_6$, terpènes, polyhydroxyalcanoates, esters méthyliques ou éthyliques d'huiles d'acides gras ou esters d'acide lactique avec alcools en $C_1$ à $C_8$.

La résine de l'invention peut être préparée par réaction entre les composants acide a) et alcool b) comme définis ci-dessus et selon les étapes successives suivantes :

i) réaction de l'ensemble du composant acide a) avec ledit composant b1) dudit composant alcool b) jusqu'à une conversion d'au moins 85 %, de préférence 100 % dudit composant b1), suivie de

ii) réaction du produit issu de l'étape i) avec le reste dudit composant alcool b), comprenant au moins un des polyols b2) ou b3) comme définis ci-haut,

les réactions desdites étapes i) et ii) ayant lieu en solution dans au moins un solvant organique pouvant former un azéotrope avec l'eau.

Le rapport carboxy/OH dans la première étape i) peut varier de 1,1 à 2,1, de préférence de 1,2 à 2.

La fonctionnalité de ladite résine est réglée par la nature du composant a) ou b) étant en excès global stœchiométrique.

Un troisième objet de l'invention concerne une composition de revêtement, de préférence une composition de revêtement en milieu solvant organique, laquelle composition comprend au moins une résine telle que définie ci-haut selon l'invention ou (comprend) une solution de résine telle que définie ci-avant. De préférence, ladite composition est une composition réticulable comprenant en plus de ladite résine au moins un agent réticulant, porteur de groupements réactifs avec les groupements hydroxyles et/ou carboxyles portés par ladite résine.

Quand ladite résine est hydroxylée, ledit agent réticulant peut être sélectionné parmi : la mélamine ou un polyisocyanate, en particulier polyisocyanate bloqué ou un polyanhydride ou un polysilane, en particulier polysilane bloqué par alcoxy et quand ladite résine est carboxylée, ledit agent réticulant peut être sélectionné parmi les polyépoxydes ou les polyols.

Comme polyols agents réticulants convenables quand ladite résine est carboxylée, on peut citer tous polyols monomères ou oligomères de structure aliphatique ou cycloaliphatique. Comme exemples de polyols monomères aliphatiques, on peut citer le triméthylol propane ou le glycérol ou le pentaérythritol ou le ditriméthylolpropane ou dipen-

taérythritol, ces polyols pouvant éventuellement être alcoxylés. D'autres polyols pouvant convenir sont des oligomères polyols acryliques, polyéthers polyols ou polyesters polyols. Des oligomères polyesters polyols convenables comme agents réticulants quand ladite résine est carboxylée sont également les résines polyesters hydroxylées telles que définies selon la présente invention.

Plus particulièrement, ladite composition de revêtement est entièrement biosourcée avec ladite résine et ledit agent réticulant étant tous deux biosourcés, de préférence à 100 % biosourcés.

Dans le cas possible où la résine porte des fonctions à la fois hydroxyles et carboxy, un mélange d'agent réticulants correspondant respectivement à chaque fonctionnalité de ladite résine peut être utilisé et éventuellement avec deux étapes d'addition pour éviter la coréaction éventuelle entre les deux agents réticulants.

De préférence, la fonctionnalité OH ou carboxy est prédominante ou unique et ledit agent réticulant est spécifique pour fonctionnalité OH seulement ou spécifique pour fonctionnalité carboxy seulement.

Selon une option particulièrement préférée, ladite composition est une composition de revêtement en milieu solvant organique et en particulier une composition de peinture ou de vernis, plus particulièrement pour surfaces métalliques. Plus préférentiellement, lesdites surfaces métalliques sont sous forme de feuilles métalliques (en anglais « coils »).

Un autre objet de l'invention concerne l'utilisation d'une résine telle que définie ci-haut ou (l'utilisation) d'une solution d'une telle résine dans les compositions de revêtements, en particulier dans les compositions de revêtements réticulables. Une telle utilisation concerne en particulier les compositions de revêtements à comportement « monocomposant » pour métal et en particulier pour revêtement de feuille métallique. Une composition à comportement « monocomposant » se caractérise par le fait qu'elle est stable au stockage et qu'elle n'est réticulable que par activation thermique, caractéristique qui est indispensable dans ce but.

Selon une option particulière, ladite utilisation concerne un revêtement primaire, une finition, un envers de bande ou un revêtement monocouche. Le terme « un envers de bande » signifie ici un revêtement appliqué sur la face « envers » ou « cachée » de la feuille métallique (bande).

Une autre utilisation potentielle de ladite résine concerne les revêtements en poudre, en particulier réticulables. Ladite résine peut être carboxylée et l'agent réticulant peut être un polyépoxyde ou un polyol à base de cyanurate, en particulier le trihydroxyéthyl cyanurate.

Selon une autre option, ladite utilisation concerne des revêtements « bicomposants ». Lesdites compositions de revêtements bicomposants sont réticulables à basse température et sans besoin d'activation thermique. En fait, dans ce cas, ladite résine en présence dudit agent réticulant réagit aussitôt mélangée audit agent. Par conséquent, une telle composition est préparée juste avant l'utilisation et n'est donc pas stable au stockage, aboutissant après mélange et réaction de ladite résine avec ledit agent réticulant, à une structure réticulée de manière irréversible.

Finalement, l'invention concerne un produit fini, en particulier un revêtement, lequel résulte de l'utilisation d'au moins une résine telle que définie ci-haut ou d'une solution de telle résine ou d'une composition de revêtement telle que définie ci-haut selon la présente invention.

Les exemples suivants sont présentés à titre d'illustration de l'invention et de ses performances et ne limitent en rien sa portée.

Partie Expérimentale

1) Matières premières utilisées

Tableau 1 : matières premières utilisées

| Nom commercial | Nom chimique | Fournisseur | Fonction technique | Nature fonction et fonctionnalité | Composant type selon invention |
|---|---|---|---|---|---|
| Polysorb® P | isosorbide | Roquette | Diol* | OH/2 | b1) |
| Oleris® Sebacic acid | Acide sébacique | Arkema | Diacide* | Carboxy/2 | a2) |
| Bio SA | Acide succinique | Bio Amber | Diacide* | Carboxy/2 | a1) |
| Glycerine® 4813 | Glycérol | Oleon | Triol* | OH/3 | b3) |
| Fascat® 4100 | acide butyl stannoique | PMC Organo Metallix | Catalyseur | - | catalyseur |

(suite)

| Nom commercial | Nom chimique | Fournisseur | Fonction technique | Nature fonction et fonctionnalité | Composant type selon invention |
|---|---|---|---|---|---|
| MIBK | Méthyl isobutyl cétone | Arkema | Solvant azéo | - | Solvant azéo |
| MPA | Méthoxy propyl acétate | BASF | Solvant résine | - | Solvant résine |
| Dibasic Ester (DBE) | Mélange d'esters** | Invista | Solvant résine | | Solvant résine |

biosourcé
** mélange d'esters méthyliques d'acide adipique, glutarique et succinique

2) Préparation de la résine (mode opératoire exemple 1 selon l'invention)

Dans un réacteur de 3 litres, chauffé électriquement, équipé :

- d'une colonne à distiller du type Vigreux surmontée d'un séparateur Dean Stark,
- d'une canne plongeante pour introduire l'azote,
- d'une sonde de température,

on charge :

- 582 g d'isosorbide,
- 246,8 g d'acide sébacique,
- 380,9 g d'acide succinique,
- 0,13 g de Fascat® 4100 (acide butyl stannoique).

Sous débit d'azote, on chauffe jusqu'à 150°C et on introduit 50,62 g de méthyl isobutyl cétone (MIBK) comme (solvant) entraîneur azéotropique. On chauffe ensuite, jusqu'à 220°C tout en éliminant l'eau de la réaction sous forme d'hétéroazéotrope avec la MIBK jusqu'à atteindre un indice d'acide constant de 165 mg KOH/g correspondant à un taux de conversion de l'isosorbide de 99,5 %. La durée de cette première étape est de 8 h. On refroidit à 180°C et on introduit dans le réacteur 55,7 g de glycérol. Le milieu réactionnel est porté à 220°C toujours sous azote, jusqu'à obtenir un indice d'acide <10 mg KOH/g. Le réacteur est refroidi à 150°C et on ajoute 617,57 g de méthoxy propyl acétate (MPA) en tant que solvant de dilution de la résine. A 90°C, le réacteur est vidangé et l'extrait sec est ajusté par ajout de 68,62 g de MPA.

Les caractéristiques finales du produit sont :

Coloration : 3 Gardner (méthode ISO 4630)
Extrait Sec : 60 % (méthode ISO 3251)
Viscosité Brookfield à 25°C (méthode ISO 3219) : 4350 mPa.s
Indice d'acide : 8 mg KOH/g (méthode ISO 2114)
Indice OH (fonctionnalité essentielle) (mg KOH/g) : 70 (méthode ISO 2554)
Isosorbide mesuré par analyse RMN du carbone 13 : 0,1 % dans la résine solvantée, ce qui correspond à un taux de conversion finale de l'isosorbide de 99,7 %.

Exemple 2 comparatif

On reproduit l'exemple 1 mais cette fois sans acide sébacique.

Au cours de cet essai, le polyester final obtenu est insoluble dans le PMA et il faut rajouter du Dibasic ester fourni par Invista qui est un mélange d'esters méthyliques dérivés de l'acide adipique, de l'acide succinique et de l'acide glutarique, de composition respective en poids (en pourcentage massique) :

- di méthyl ester de l'acide adipique : 0,1 - 22 %,
- di méthyl ester de l'acide succinique : 0,1 - 98 %

- diméthyl ester de l'acide glutarique : 0,3 - 99 %

Les caractéristiques finales du produit sont :

Coloration : 3 Gardner (méthode ISO 4630)
Extrait Sec : 48 % (méthode ISO 3251) pour un ratio MPA/DBE de 67/33
Viscosité Brookfield à 25°C (méthode ISO 3219) : 800 mPa.s
Indice d'acide : 8 mg KOH/g (méthode ISO 2114)
Indice OH (fonctionnalité essentielle) (mg KOH/g) : 70
Isosorbide mesuré par analyse RMN du carbone 13 : 0,09 % dans la résine solvantée, ce qui correspond à un taux de conversion finale de l'isosorbide de 99,5 %.

3) Application des résines dans des peintures satinées pour feuille métallique

3.1) Formulation de peintures satinées

Tableau 2 : Compositions et matières premières utilisées

| Composant | Parties en poids sur 1000 | Réf composant | Fonction | Nom Chimique | Fournisseur |
|---|---|---|---|---|---|
| Résine exemple 1 (partie 1) | 209 | (1) | Liant | Résine hydroxylée selon l'invention | - |
| PMA (partie 1) | 25,5 | (2) | Solvant | Méthoxy propyl acétate | BASF |
| Disperbyk® -161 | 5,5 | (3) | Dispersant | Copolymère bloc | BYK |
| TiO2-KRONOS 2360 | 243 | (4) | Pigment | Oxyde de Titane | KRONOS |
| Silice Aerosil® R972 | 2,5 | (5) | Additif rhéologique | Silice | EVONIK |
| Résine exemple 1 (partie 2) | 220 | (1) | Liant | Résine hydroxylée selon invention | - |
| PMA (partie 2) | 31 | (2) | Solvant | Méthoxy propyl acétate | BASF |
| Silice SYLOID® ED 40 | 30 | (6) | Agent matant | Silice | Grace |
| CYMEL® 303 LF | 46 | (7) | Agent réticulant | Mélamine méthylée | Allnex |
| Catalyst PTSA | 7,5 | (8) | catalyseur | Acide p-toluène sulfonique (12,5 % dans butanol) | Aldrich |
| PMA (partie 3) | 154 | (2) | solvant | Méthoxy propyl acétate | BASF |
| Solvarex® 9 | 24 | (9) | solvant | Hydrocarbure aromatique | Total |

(suite)

| Composant | Parties en poids sur 1000 | Réf composant | Fonction | Nom Chimique | Fournisseur |
|---|---|---|---|---|---|
| Crayvallac® Flow 200 | 2 | (10) | Agent d'étalement | Polyester | Arkema |
| Total | 1000 | | | | |

3.2) <u>Mode opératoire de préparation des peintures satinées</u>

Dans un bécher de 1 litre thermostaté à température ambiante, on introduit dans l'ordre indiqué les composés suivants (1) (partie 1), (2) (partie 1), (3), (4) et (5). Ce mélange est mis sous agitation à l'aide d'un agitateur type Dispermat, puis dispersé pendant 30 minutes à 3500 tours/min. On ajoute ensuite le reste (partie 2) du liant (1), le reste (partie 2) du solvant (2) et le composé (6). La dispersion est poursuivie pendant 15 minutes à 2500 tours/min. Toujours sous agitation à 1000 tours/min, on ajoute les composés (7) et (8). La viscosité de la peinture est ajustée grâce à l'ajout de (2) (partie 3) et (9). Enfin, on ajoute toujours sous agitation à 1000 tours/min le composé (10).
Les caractéristiques de la peinture satinée obtenue sont présentées au tableau 3 ci-dessous.

Tableau 3 : caractéristiques de la peinture satinée

| Caractéristique | Méthode de mesure | Exemple 1 selon l'invention | Exemple 2 comparatif |
|---|---|---|---|
| Densité (g/cm$^3$) | NF EN ISO 2811-1 | 1,27 | 1,32 |
| Solide en poids (%) ES | ISO 3251 | 58,3 | 57,5 |
| Solide en volume (%) | ratio volume sec / volume total | 44,2 | 44,7 |
| COV (g/l)* | calcul grammes solvant par litre de peinture | 530 | 558 |
| CPV (%)** | calcul ratio volume pigments / volume pigments + volume liant (calculé sur matière sèche) | 22,8 | 22,7 |
| Viscosité Cône plan à 25°C (m.Pas) | ISO 2884-1 | 520 | 520 |
| *COV : Composés Organiques Volatiles **CPV : Concentration Pigmentaire Volumique | | | |

3.3) <u>Feuille métallique utilisée, conditions d'application de la peinture satinée et conditionnement avant tests d'évaluation</u>

La tôle utilisée pour les essais est une tôle en acier galvanisée de 0,5 millimètre d'épaisseur prétraitée avec une solution de chromate.
La peinture est appliquée à l'aide d'un applicateur type Bar Coater. Deux types d'application sont réalisés :

- revêtement de finition (« top coat »)
- revêtement direct sur la tôle métallique (« direct to metal »)

L'épaisseur du revêtement de finition et du revêtement direct sur la tôle métallique est de 20 $\mu$m.
Dans le cas du revêtement de finition (« top coat »), la peinture est appliquée sur une tôle métallique enduite déjà d'un revêtement primaire compatible de 5 $\mu$m d'épaisseur. L'épaisseur totale du revêtement est de 25 $\mu$m en incluant le revêtement primaire (top coat de 20 $\mu$m).
La tôle ainsi revêtue est introduite dans un four à 385°C. La réticulation avec la mélamine s'effectue à un pic de température sur le métal (appelé PMT) de 232°C pendant 35 secondes.
La peinture, en tant que revêtement direct sur le métal et appliquée sur un primaire en tant que revêtement de finition, est ensuite évaluée suivant divers tests de performances, après conditionnement des panneaux d'essais (tôle peinte) dans une salle climatisée à 23°C ± 2 avec l'humidité contrôlée à 50 % ± 5 %.

4) Tests d'évaluation des performances des peintures

Tableau 4 : Tests utilisés

| Tests | Description ou renvoi à référence de méthode normée |
|---|---|
| Test d'emboutissage (mm) | NF EN ISO 1520 |
| Test d'adhérence (cotation de 0 = bon à 5 = mauvais) | NF EN ISO 2409 |
| Brillant à 60° (GU) | NF EN ISO 2813 |
| Test de pliage en T (cotation de 0,5 T jusqu'à valeur finale avec un pas de 0,5 unité à chaque pliage jusqu'à dernière absence de dégradation du revêtement : moins T est élevé, meilleur est le résultat) | NF EN 13523-7 |
| Dureté PERSOZ (s) | NF EN ISO 1522 |

5) Résultats et conclusion

5.1) Revêtement direct sur le métal (application DTM)

Tableau 5 : résultats obtenus en revêtement direct sur métal

| | Exemple 1 selon l'invention | Exemple 2 comparatif |
|---|---|---|
| Test d'emboutissage (mm) | 4,5 | 2,8 |
| Test d'adhérence | 0 | entre 0 et 1 |
| Test de pliage | 5 T | > 6 T |
| Dureté PERSOZ (s) | 207 | 233 |

5.2) Revêtement de finition sur primaire (« top coat »)

Tableau 6 : résultats obtenus en revêtement de finition

| | Exemple 1 selon l'invention | Exemple 2 comparatif |
|---|---|---|
| Test d'emboutissage (mm) | 6,2 | 5,8 |
| Test d'adhérence | 0 | 0 |
| Brillant à 60° (GU) | 28 | 15 |
| Test de pliage | 3,5 T | 5 T |
| Dureté PERSOZ (s) | 220 | 230 |

Le polyester polyol à base de matières premières d'origine biosourcée, objet de l'invention, permet de préparer des revêtements pour feuille de métal présentant des propriétés applicatives intéressantes avec notamment un bon compromis entre dureté et test de pliage.

L'exemple 1, selon l'invention, réalisé avec acide sébacique conduit à une peinture beaucoup plus flexible (résultat du test de pliage) avec un niveau de dureté très satisfaisant pour l'application visée.

**Revendications**

1. Résine polyester de structure linéaire ou ramifiée et exempte d'acides gras insaturés, qui est hydroxylée ou carboxylée, éventuellement hydroxylée et carboxylée, **caractérisée en ce qu'**elle est à base de :

   a) un composant acide a) comprenant :

   a1) au moins un polyacide ou anhydride carboxylique en $C_4$ à $C_6$, de préférence de fonctionnalité $f_{a1}$ allant de 2 à 4 et plus préférentiellement égale à 2
   a2) au moins un polyacide ou anhydride carboxylique en $C_8$ à $C_{54}$, de préférence de fonctionnalité $f_{a2}$ allant de 2 à 4 et plus préférentiellement égale à 2
   a3) en option au moins un monoacide saturé en $C_2$ à $C_{22}$, éventuellement pouvant porter un groupement hydroxyle,

   b) un composant alcool b) comprenant :

   b1) au moins un polyol biosourcé de fonctionnalité $f_{b1}$ d'au moins 2, de préférence 2, porteur d'un motif 1,4:3,6 dianhydrohexitol
   et au moins un des deux polyols b2) ou b3) suivants :
   b2) au moins un polyol différent de b1) et de fonctionnalité $f_{b2}$ d'au moins 2, de préférence 2, qui est un polyol en $C_3$ à $C_{36}$
   b3) au moins un polyol différent de b1) et de b2 de fonctionnalité $f_{b3}$ d'au moins 3, de préférence 3,

   avec a2) étant un polyacide biosourcé et choisi parmi : l'acide azélaïque ($C_9$), acide sébacique ($C_{10}$), acide undécane dioïque, acide dodécane dioïque ou dimères et trimères d'acides gras respectivement en $C_{36}$ et $C_{54}$.

2. Résine selon la revendication 1, **caractérisée en ce que** ledit motif de polyol b1) est l'isosorbide (1,4:3,6 dianhydro-D-sorbitol), l'isomannide (1,4:3,6 dianhydro-D-mannitol) ou l'isoidide (1,4:3,6 dianhydro-L-iditol).

3. Résine selon l'une des revendications 1 à 2, **caractérisée en ce qu'**une fraction d'au moins 50 %, de préférence d'au moins 75 % en poids de ladite résine est biosourcée.

4. Résine selon l'une des revendications 1 à 3, **caractérisée en ce que** ledit composant b) comprend b2) et b3) et qu'au moins 50 % en poids, de préférence au moins 75 % en poids dudit composant b) est biosourcé.

5. Résine selon l'une des revendications 1 à 4, **caractérisée en ce que** les composants a) et b) sont à 100 % biosourcés.

6. Résine selon l'une des revendications 1 à 5, **caractérisée en ce que** ledit polyol b2) est biosourcé et choisi parmi le 1,3 propylène diol ou le 1,2 propylène diol, le 1,4 butane diol ou les diols à base d'acides gras saturés.

7. Résine selon l'une des revendications 1 à 6, **caractérisée en ce que** ledit polyol b3) est biosourcé et choisi parmi le glycérol et ses dérivés éther-polyols, tels que les polyglycérols.

8. Résine selon l'une des revendications 1 à 7, **caractérisée en ce que** ledit polyacide a1) est un diacide aliphatique biosourcé choisi parmi : acide succinique, acide tartrique, acide citrique, acide malique, acide itaconique, acide glutarique, acide glutamique, acide fumarique, acide furanne dicarboxylique, acide tetrahydrofuranne 2,5 dicarboxylique et acide tetrahydrofuranne 3,5 dicarboxylique, de préférence acide succinique, acide itaconique, acide glutamique, acide fumarique, acide furane dicarboxylique, acide tetrahydrofuranne 2,5 dicarboxylique et acide tetrahydrofuranne 3,5 dicarboxylique.

9. Résine selon l'une des revendications 1 à 8, **caractérisée en ce que** ledit monoacide a3) est présent dans la composition de ladite résine et sélectionné parmi : acide acétique, acide pyruvique, acide lactique ou la colophane (acide abiétique et isomères en $C_{20}$) ou un acide gras saturé en $C_{12}$ à $C_{22}$.

10. Résine selon l'une des revendications 1 à 9, **caractérisée en ce que** ledit polyol b1) représente au moins 30 % en poids de ladite résine.

11. Résine selon l'une des revendications 1 à 10, **caractérisée en ce qu'**elle a une fonctionnalité OH et/ou acide carboxylique correspondant à un indice de OH et/ou d'acide allant de 10 à 200 mg KOH/g.

12. Résine selon l'une des revendications 1 à 10, **caractérisée en ce qu'**elle a une fonctionnalité carboxyl correspondant à un indice d'acide inférieur à 20, de préférence inférieur à 10 et plus préférentiellement inférieur à 5 et en particulier 0 mg KOH/g et une fonctionnalité en OH correspondant à un indice OH allant de 10 à 200, de préférence de 10 à 150, plus préférentiellement de 10 à 100 mg KOH/g.

13. Résine selon l'une des revendications 1 à 12, **caractérisée en ce que** sa masse moléculaire moyenne en nombre Mn varie de 500 à 20000, de préférence de 750 à 10000, déterminée comme indiqué dans la description.

14. Résine selon l'une des revendications 1 à 13, **caractérisée en ce que** la Tg de ladite résine varie de -10°C à 100°C, de préférence de 10 à 50°C, déterminée comme indiqué dans la description.

15. Solution de résine dans un solvant organique, **caractérisée en ce qu'**elle comprend au moins une résine telle que définie selon l'une des revendications 1 à 14.

16. Solution selon la revendication 15, **caractérisée en ce que** ledit solvant est sélectionné parmi les esters méthyliques ou esters éthyliques d'acides monocarboxyliques en $C_2$ à $C_4$ ou esters desdits acides monocarboxyliques avec des monoéthers méthoxy ou éthoxy de diols en $C_2$ à $C_4$, en particulier l'acétate de méthoxy propyle ou parmi diesters méthyliques ou éthyliques de diacides carboxyliques en $C_4$ à $C_6$, terpènes, polyhydroxyalcanoates, esters méthyliques ou éthyliques d'huiles d'acides gras ou esters d'acide lactique avec alcools en $C_1$ à $C_8$.

17. Composition de revêtement, de préférence en milieu solvant organique, comprenant au moins une résine telle que définie selon l'une des revendications 1 à 14 ou une solution de résine telle que définie selon la revendication 15 ou 16.

18. Composition selon la revendication 17, **caractérisée en ce qu'**il s'agit d'une composition réticulable comprenant en plus de ladite résine au moins un agent réticulant, porteur de groupements réactifs avec les groupements hydroxyles et/ou carboxyles portés par ladite résine.

19. Composition selon la revendication 17 ou 18, **caractérisée en ce que** ledit agent réticulant est sélectionné parmi la mélamine ou un polyisocyanate, en particulier polyisocyanate bloqué ou un polyanhydride ou un polysilane, en particulier polysilane bloqué par alcoxy quand ladite résine est hydroxylée ou ledit agent réticulant est sélectionné parmi les polyépoxydes ou polyols quand ladite résine est carboxylée.

20. Composition selon l'une des revendications 16 à 19, **caractérisée en ce qu'**il s'agit d'une composition de revêtement en milieu solvant organique, en particulier d'une composition de peinture ou de vernis, plus particulièrement pour surfaces métalliques.

21. Utilisation d'une résine telle que définie selon l'une des revendications 1 à 14 ou d'une solution de résine telle que définie selon la revendication 15 ou 16 dans les compositions de revêtements, en particulier dans les compositions de revêtements réticulables.

22. Utilisation selon la revendication 21, **caractérisée en ce qu'**il s'agit de compositions de revêtements à comportement « monocomposant » pour métal, en particulier pour revêtement de feuille métallique (« coil »).

23. Utilisation selon la revendication 21 ou 22, **caractérisée en ce qu'**il s'agit de revêtement primaire, une finition, un envers de bande ou un revêtement monocouche.

24. Utilisation selon la revendication 21 ou 22, **caractérisée en ce qu'**il s'agit de revêtements en poudre.

25. Utilisation selon la revendication 21, **caractérisée en ce qu'**il s'agit de revêtements « bicomposants ».

26. Revêtement **caractérisé en ce qu'**il résulte de l'utilisation d'au moins une résine telle que définie selon l'une des revendications 1 à 14 ou d'une solution de résine telle que définie selon la revendication 15 ou 16 ou d'une composition de revêtement telle que définie selon l'une des revendications 17 à 20.

**EP 3 191 539 B1**

**Patentansprüche**

1. Polyesterharz, das eine lineare oder verzweigte Struktur aufweist und frei von ungesättigten Fettsäuren ist und hydroxyliert oder carboxyliert, gegebenenfalls hydroxyliert und carboxyliert, ist, **dadurch gekennzeichnet, dass** es auf

   a) einer Säurekomponente a), umfassend:

      a1) mindestens eine $C_4$- bis $C_6$-Polycarbonsäure oder ein Anhydrid davon, vorzugsweise mit einer Funktionalität $f_{a1}$ im Bereich von 2 bis 4 und weiter bevorzugt gleich 2,
      a2) mindestens eine $C_8$- bis $C_{54}$-Polycarbonsäure oder ein Anhydrid davon, vorzugsweise mit einer Funktionalität $f_{a2}$ im Bereich von 2 bis 4 und weiter bevorzugt gleich 2,
      a3) gegebenenfalls mindestens eine gesättigte $C_2$- bis $C_{22}$-Monosäure, die gegebenenfalls eine Hydroxylgruppe tragen kann,

   b) einer Alkoholkomponente b), umfassend:
   b1) mindestens ein biobasiertes Polyol mit einer Funktionalität $f_{b1}$ von mindestens 2, vorzugsweise 2, das eine 1,4:3,6-Dianhydrohexitol-Einheit trägt,
   und mindestens eines der zwei folgenden Polyole b2) oder b3):

      b2) mindestens ein von b1) verschiedenes Polyol mit einer Funktionalität $f_{b2}$ von mindestens 2, vorzugsweise 2, bei dem es sich um ein $C_3$-$C_{36}$-Polyol handelt,
      b3) mindestens ein von b1) und von b2) verschiedenes Polyol mit einer Funktionalität $f_{b3}$ von mindestens 3, vorzugsweise 3,

   basiert, wobei a2) eine biobasierte Polysäure ist und aus Azelainsäure ($C_9$), Sebacinsäure ($C_{10}$), Undecandisäure, Dodecandisäure oder $C_{36}$- bzw. $C_{54}$-Fettsäuredimeren und -trimeren ausgewählt ist.

2. Harz nach Anspruch 1, **dadurch gekennzeichnet, dass** es sich bei der Einheit von Polyol b1) um Isosorbid (1,4:3,6-Dianhydro-D-sorbitol), Isomannid (1,4:3,6-Dianhydro-D-mannitol) oder Isoidid (1,4:3,6-Dianhydro-L-iditol) handelt.

3. Harz nach einem der Ansprüche 1 bis 2, **dadurch gekennzeichnet, dass** ein Anteil von mindestens 50 Gew.-%, vorzugsweise mindestens 75 Gew.-%, des Harzes biobasiert ist.

4. Harz nach einem der Ansprüche 1 bis 3, **dadurch gekennzeichnet, dass** die Komponente b) b2) und b3) umfasst und mindestens 50 Gew.-%, vorzugsweise mindestens 75 Gew.-%, der Komponente b) biobasiert sind.

5. Harz nach einem der Ansprüche 1 bis 4, **dadurch gekennzeichnet, dass** die Komponenten a) und b) zu 100 % biobasiert sind.

6. Harz nach einem der Ansprüche 1 bis 5, **dadurch gekennzeichnet, dass** das Polyol b2) biobasiert ist und aus 1,3-Propylendiol oder 1,2-Propylendiol, 1,4-Butandiol oder Diolen auf Basis von gesättigten Fettsäuren ausgewählt ist.

7. Harz nach einem der Ansprüche 1 bis 6, **dadurch gekennzeichnet, dass** das Polyol b3) biobasiert ist und aus Glycerin und Etherpolyolderivaten davon, wie Polyglycerinen, ausgewählt ist.

8. Harz nach einem der Ansprüche 1 bis 7, **dadurch gekennzeichnet, dass** es sich bei der Polysäure a1) um eine biobasierte aliphatische Disäure handelt, die aus Bernsteinsäure, Weinsäure, Citronensäure, Äpfelsäure, Itaconsäure, Glutarsäure, Glutaminsäure, Fumarsäure, Furandicarbonsäure, Tetrahydrofuran-2,5-dicarbonsäure und Tetrahydrofuran-3,5-dicarbonsäure, vorzugsweise Bernsteinsäure, Itaconsäure, Glutaminsäure, Fumarsäure, Furandicarbonsäure, Tetrahydrofuran-2,5-dicarbonsäure und Tetrahydrofuran-3,5-dicarbonsäure, ausgewählt ist.

9. Harz nach einem der Ansprüche 1 bis 8, **dadurch gekennzeichnet, dass** die Monosäure a3) in der Zusammensetzung des Harzes vorliegt und aus Essigsäure, Brenztraubensäure, Milchsäure oder Kolophonium (Abietinsäure und $C_{20}$-Isomere) oder einer gesättigten $C_{12}$- bis $C_{22}$-Fettsäure ausgewählt ist.

10. Harz nach einem der Ansprüche 1 bis 9, **dadurch gekennzeichnet, dass** das Polyol b1) mindestens 30 Gew.-% des Harzes ausmacht.

11. Harz nach einem der Ansprüche 1 bis 10, **dadurch gekennzeichnet, dass** es eine OH- und/oder Carbonsäure-Funktionalität aufweist, die einer OH- und/oder Säurezahl von 10 bis 200 mg KOH/g entspricht.

12. Harz nach einem der Ansprüche 1 bis 10, **dadurch gekennzeichnet, dass** es eine Carboxylfunktionalität, die einer Säurezahl von weniger als 20, vorzugsweise weniger als 10 und weiter bevorzugt weniger als 5 und insbesondere 0 mg KOH/g entspricht, und eine OH-Funktionalität, die einer OH-Zahl im Bereich von 10 bis 200, vorzugsweise 10 bis 150 und weiter bevorzugt 10 bis 100 mg KOH/g entspricht, aufweist.

13. Harz nach einem der Ansprüche 1 bis 12, **dadurch gekennzeichnet, dass** ihre wie in der Beschreibung angegeben bestimmte zahlenmittlere Molmasse Mn im Bereich von 500 bis 20.000, vorzugsweise von 750 bis 10.000, liegt.

14. Harz nach einem der Ansprüche 1 bis 13, **dadurch gekennzeichnet, dass** die wie in der Beschreibung angegeben bestimmte Tg des Harzes im Bereich von - 10 °C bis 100 °C, vorzugsweise von 10 bis 50 °C, liegt.

15. Harzlösung in einem organischen Lösungsmittel, **dadurch gekennzeichnet, dass** sie mindestens ein Harz gemäß einem der Ansprüche 1 bis 14 umfasst.

16. Lösung nach Anspruch 15, **dadurch gekennzeichnet, dass** das Lösungsmittel aus Methylestern oder Ethylestern von $C_2$- bis $C_4$-Monocarbonsäuren oder Estern dieser Monocarbonsäuren mit Methoxy- oder Ethoxymonoethern von $C_2$- bis $C_4$-Diolen, insbesondere Essigsäuremethoxypropylester, oder Methyldiestern oder Ethyldiestern von $C_4$- bis $C_6$-Dicarbonsäuren, Terpenen, Polyhydroxyalkanoaten, Methyl- oder Ethylestern von Fettsäurenölen oder Estern von Milchsäure mit $C_1$- bis $C_8$-Alkoholen ausgewählt ist.

17. Beschichtungszusammensetzung, vorzugsweise in organischem Lösungsmittelmedium, umfassend mindestens ein Harz gemäß einem der Ansprüche 1 bis 14 oder eine Harzlösung gemäß Anspruch 15 oder 16.

18. Zusammensetzung nach Anspruch 17, **dadurch gekennzeichnet, dass** es sich um eine vernetzbare Zusammensetzung handelt, die zusätzlich zu dem Harz mindestens ein Vernetzungsmittel umfasst, das Gruppen trägt, die gegenüber den Hydroxyl- und/oder Carboxylgruppen des Harzes reaktiv sind.

19. Zusammensetzung nach Anspruch 17 oder 18, **dadurch gekennzeichnet, dass** das Vernetzungsmittel aus Melamin oder einem Polyisocyanat, insbesondere einem blockierten Polyisocyanat, oder einem Polyanhydrid oder einem Polysilan, insbesondere einem alkoxyblockierten Polysilan, ausgewählt ist, wenn das Harz hydroxyliert ist, oder das Vernetzungsmittel aus Polyepoxiden oder Polyolen ausgewählt ist, wenn das Harz carboxyliert ist.

20. Zusammensetzung nach einem der Ansprüche 16 bis 19, **dadurch gekennzeichnet, dass** es sich um eine Beschichtungszusammensetzung in organischem Lösungsmittelmedium, insbesondere eine Anstrich- oder Klarlackzusammensetzung, und spezieller für Metalloberflächen, handelt.

21. Verwendung eines Harzes gemäß einem der Ansprüche 1 bis 14 oder eine Harzlösung gemäß Anspruch 15 oder 16 in Beschichtungszusammensetzungen, insbesondere in vernetzbaren Beschichtungszusammensetzungen.

22. Verwendung nach Anspruch 21, **dadurch gekennzeichnet, dass** es sich um Beschichtungszusammensetzungen mit "Einkomponenten"-Verhalten für Metall, insbesondere zur Beschichtung von Metallblech ("Coil") handelt.

23. Verwendung nach Anspruch 21 oder 22, **dadurch gekennzeichnet, dass** es sich um eine Grundierung, eine Deckschicht, eine Rückschicht oder eine einschichtige Beschichtung handelt.

24. Verwendung nach Anspruch 21 oder 22, **dadurch gekennzeichnet, dass** es sich um Pulverbeschichtungen handelt.

25. Verwendung nach Anspruch 21, **dadurch gekennzeichnet, dass** es sich um "Zweikomponenten"-Beschichtungen handelt.

26. Beschichtung, **dadurch gekennzeichnet, dass** sie sich aus der Verwendung mindestens eines Harzes gemäß einem der Ansprüche 1 bis 14 oder einer Harzlösung gemäß Anspruch 15 oder 16 oder einer Beschichtungszusammensetzung gemäß einem der Ansprüche 17 bis 20 ergibt.

**Claims**

1. Polyester resin having a linear or branched structure and free of unsaturated fatty acids, which is hydroxylated or carboxylated, optionally hydroxylated and carboxylated, **characterized in that** it is based on:

   a) an acid component a) comprising:

   a1) at least one $C_4$ to $C_6$ polycarboxylic acid or anhydride, preferably having a functionality $f_{a1}$ ranging from 2 to 4 and more preferentially equal to 2,
   a2) at least one $C_8$ to $C_{54}$ polycarboxylic acid or anhydride, preferably having a functionality $f_{a2}$ ranging from 2 to 4 and more preferentially equal to 2,
   a3) optionally, at least one $C_2$ to $C_{22}$ saturated monoacid, which can optionally bear a hydroxyl group,

   b) an alcohol component b) comprising:
   b1) at least one biobased polyol having a functionality $f_{b1}$ of at least 2, preferably 2, bearing a 1,4:3,6-dianhydrohexitol unit,
   and at least one of the following two polyols b2) and b3):

   b2) at least one polyol different than b1) and having a functionality $f_{b2}$ of at least 2, preferably 2, which is a $C_3$ to $C_{36}$ polyol,
   b3) at least one polyol different than b1) and than b2) having a functionality $f_{b3}$ of at least 3, preferably 3,

   wherein a2) is a polyacid which is biobased and chosen from: azelaic acid ($C_9$), sebacic acid ($C_{10}$), undecanedioic acid, dodecanedioic acid or respectively $C_{36}$ and $C_{54}$ fatty acid dimers and trimers.

2. Resin according to Claim 1, **characterized in that** said unit of polyol b1) is isosorbide (1,4:3,6-dianhydro-D-sorbitol), isomannide (1,4:3,6-dianhydro-D-mannitol) or isoidide (1,4:3,6-dianhydro-L-iditol).

3. Resin according to either of Claims 1 and 2, **characterized in that** a fraction of at least 50%, preferably of at least 75%, by weight of said resin is biobased.

4. Resin according to one of Claims 1 to 3, **characterized in that** said component b) comprises b2) and b3) and **in that** at least 50% by weight, preferably at least 75% by weight, of said component b) is biobased.

5. Resin according to one of Claims 1 to 4, **characterized in that** the components a) and b) are 100% biobased.

6. Resin according to one of Claims 1 to 5, **characterized in that** said polyol b2) is biobased and is chosen from 1,3-propylenediol or 1,2-propylenediol, 1,4-butanediol or diols based on saturated fatty acids.

7. Resin according to one of Claims 1 to 6, **characterized in that** said polyol b3) is biobased and chosen from glycerol and ether-polyol derivatives thereof, such as polyglycerols.

8. Resin according to one of Claims 1 to 7, **characterized in that** said polyacid a1) is a biobased aliphatic diacid chosen from: succinic acid, tartaric acid, citric acid, malic acid, itaconic acid, glutaric acid, glutamic acid, fumaric acid, furandicarboxylic acid, tetrahydrofuran-2,5-dicarboxylic acid and tetrahydrofuran-3,5-dicarboxylic acid, preferably succinic acid, itaconic acid, glutamic acid, fumaric acid, furandicarboxylic acid, tetrahydrofuran-2,5-dicarboxylic acid and tetrahydrofuran-3,5-dicarboxylic acid.

9. Resin according to one of Claims 1 to 8, **characterized in that** said monoacid a3) is present in the composition of said resin and selected from: acetic acid, pyruvic acid, lactic acid or rosin (abietic acid and $C_{20}$ isomers) or a $C_{12}$ to $C_{22}$ saturated fatty acid.

10. Resin according to one of Claims 1 to 9, **characterized in that** said polyol b1) represents at least 30% by weight of said resin.

11. Resin according to one of Claims 1 to 10, **characterized in that** it has an OH and/or carboxylic acid functionality corresponding to an OH and/or acid number ranging from 10 to 200 mg KOH/g.

**12.** Resin according to one of Claims 1 to 10, **characterized in that** it has a carboxyl functionality corresponding to an acid number of less than 20, preferably less than 10 and more preferentially less than 5 and in particular 0 mg KOH/g and an OH functionality corresponding to an OH number ranging from 10 to 200, preferably from 10 to 150, more preferentially from 10 to 100 mg KOH/g.

**13.** Resin according to one of Claims 1 to 12, **characterized in that** its number-average molecular weight Mn ranges from 500 to 20 000, preferably from 750 to 10 000, determined as indicated in the description.

**14.** Resin according to one of Claims 1 to 13, **characterized in that** the Tg of said resin ranges from - 10°C to 100°C, preferably from 10 to 50°C determined as indicated in the description.

**15.** Solution of resin in an organic solvent, **characterized in that** it comprises at least one resin as defined in one of Claims 1 to 14.

**16.** Solution according to Claim 15, **characterized in that** said solvent is selected from the methyl esters or ethyl esters of $C_2$ to $C_4$ monocarboxylic acids or esters of said monocarboxylic acids with methoxy or ethoxy monoethers of $C_2$ to $C_4$ diols, in particular methoxypropyl acetate, or from methyl or ethyl diesters of $C_4$ to $C_6$ dicarboxylic acids, terpenes, polyhydroxyalkanoates, methyl or ethyl esters of fatty acid oils or esters of lactic acid with $C_1$ to $C_8$ alcohols.

**17.** Coating composition, preferably in an organic solvent medium, comprising at least one resin as defined in one of Claims 1 to 14 or a solution of resin as defined in Claim 15 or 16.

**18.** Composition according to Claim 17, **characterized in that** it is a crosslinkable composition comprising, in addition to said resin, at least one crosslinking agent, bearing groups which are reactive with the hydroxyl and/or carboxyl groups borne by said resin.

**19.** Composition according to Claim 17 or 18, **characterized in that** said crosslinking agent is selected from melamine or a polyisocyanate, in particular a blocked polyisocyanate, or a polyanhydride or a polysilane, in particular an alkoxy-blocked polysilane, when said resin is hydroxylated, or said crosslinking agent is selected from polyepoxides or polyols when said resin is carboxylated.

**20.** Composition according to one of Claims 16 to 19, **characterized in that** it is a coating composition in an organic solvent medium, in particular a paint or varnish composition, more particularly for metal surfaces.

**21.** Use of a resin as defined in one of Claims 1 to 14 or of a solution of resin as defined in Claim 15 or 16 in coating compositions, in particular in crosslinkable coating compositions.

**22.** Use according to Claim 21, **characterized in that** it involves coating compositions with a "single-component" behaviour for metal, in particular for coating a metal sheet (coil).

**23.** Use according to Claim 21 or 22, **characterized in that** it involves a primer coat, a finish, a backing coat or a monolayer coat.

**24.** Use according to Claim 21 or 22, **characterized in that** it involves powder coatings.

**25.** Use according to Claim 21, **characterized in that** it involves "two-component" coatings.

**26.** Coating, **characterized in that** it results from the use of at least one resin as defined in one of Claims 1 to 14 or of a solution of resin as defined in Claim 15 or 16 or of a coating composition as defined in one of Claims 17 to 20.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012042153 A

- EP 2325229 A1

**Littérature non-brevet citée dans la description**

- **B. A. NOORDOVER et al.** *J. Biomacromolecules,* 2006, vol. 7, 3406-3416

- *Macromolecules,* 1976, vol. 9, 199-211